Europäisches Patentamt

European Patent Office

Office européen des brevets

(11) Veröffentlichungsnummer: **0 243 711**
**A2**

(12) **EUROPÄISCHE PATENTANMELDUNG**

(21) Anmeldenummer: **87104822.9**

(22) Anmeldetag: **01.04.87**

(51) Int. Cl.⁴: **B23Q 3/157**

(30) Priorität: **02.05.86 DE 3614807**

(43) Veröffentlichungstag der Anmeldung:
**04.11.87 Patentblatt 87/45**

(84) Benannte Vertragsstaaten:
**CH DE FR GB IT LI**

(71) Anmelder: **MAHO Aktiengesellschaft**
**Postfach 1280**
**D-8962 Pfronten(DE)**

(72) Erfinder: **Babel, Werner**
**Achweg 19**
**D-8962 Pfronten(DE)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Werkzeuchwechsel-Vorrichtung.**

(57) Gegenstand der Erfindung ist eine Vorrichtung für den Werkzeugwechsel der Horizontal-und Vertikalspindel einer Universal-Fräsmaschine, bestehend aus einem Werkzeugmagazin (22) und aus einem Werkzeugwechsler (11), der die Werkzeuge vom Magazin übernimmt und sie wahlweise zur Vertikal- oder Horizontalspindel transportiert. Erfindungsgemäß ist der Vertikalspindel und der Horizontalspindel je ein Schnellwechsler (4) zugeordnet, der einen motorisch verdrehbar und axial verschiebbar parallel zur jeweiligen Spindelachse im Vertikal-Fräskopf (2) und im Spindelstock (1) angeordneten Drehbolzen (6) und ein vor der jeweiligen Spindel angeordnetes Tragelement (7) mit zwei Werkzeugaufnahmen in Form von Ausschnitten mit Federzangen enthält, von denen in jeder Endlage ein Ausschnitt (8) koaxial zur jeweiligen Spindelachse (5) ausgerichtet und der andere diametral gegenüberliegende Ausschnitt (9) neben dem Vertikal-Fräskopf (2) und dem Spindelstock im Zugriffsbereich des Werkzeugwechslers (11) angeordnet ist.

Fig.1

## Werkzeugwechsel-Vorrichtung

Die Erfindung betrifft eine Werkzeugwechsel-Vorrichtung der im Oberbegriff des Patentanspruchs 1 angegebenen Gattung, mit welcher die Werkzeuge der Vertikalspindel und die der Horizontalspindel nach Bedarf und entsprechend dem jeweiligen Steuerungs-bzw. Bearbeitungsprogramm ohne manuelle Eingriffe gewechselt und dem Werkzeugmagazin übergeben werden können.

Ein besonderer Vorteil von Universal-Fräsmaschinen ist es, daß die Werkstücke in nur einer Aufspannung nacheinander mit der Horizontalspindel und der Vertikalspindel bearbeitet werden können, wobei die Operationen zum Wechsel der Arbeitsspindeln bei modernen Maschinen, z. B. bei sog. Bearbeitungszentren, automatisiert sind. Die universelle Bearbeitung auch komplizierter Werkstücke in einer einzigen Aufspannung erhöht die Bearbeitungsgenauigkeit und verringert die Totzeiten.

Problematisch gestaltet sich jedoch der programmgesteuerte Wechsel der Werkzeuge für die Horizontalspindel und die Vertikalspindel mittels eines herkömmlichen Werkzeugwechslers, z. B. gemäß DE-OS 33 44 084. Aufgrund der zueinander senkrechten Ausrichtung der beiden Spindeln muß das Übergabeglied des Werkzeugwechslers Bewegungen um mehrere Achsen motorisch ausführen können, um die Werkzeuge dem Magazin zu entnehmen und wahlweise entweder die Horizontalspindel oder die Vertikalspindel zu bedienen. Bei stillgesetzter Maschine müssen relativ lange aus unterschiedlichen Bewegungen zusammengesetzte Wege vom Werkzeugwechsler zurückgelegt werden, was die Wechselzeiten verlängert und damit die Maschinenleistung vermindert. Darüber hinaus müssen die unterschiedlichen Bewegungen des Werkzeugwechslers bzw. seines das Werkzeug tragenden Bauteils sehr exakt ausgeführt werden, damit in der Übergabeposition die Werkzeugachse zur Spindelachse genau zentriert ist. Diese Forderungen lassen sich bei einem herkömmlichen Werkzeugwechsler nur mit einem hohen Aufwand erreichen.

Aufgabe der Erfindung ist es, eine zur wahlweisen Bedienung der Horizontalspindel und der Vertikalspindel einer Universal-Fräsmaschine geeignete Werkzeugwechselvorrichtung zu schaffen, die eine Beschleunigung des Ein-und Ausbaus der Werkzeuge in die und aus der jeweiligen Arbeitsspindel bei insgesamt verringertem technischen Aufwand ermöglicht und damit verkürzte Totzeiten der Werkzeugmaschine ergibt.

Diese Aufgabe wird erfindungsgemäß durch die Merkmale des Patentanspruchs 1 gelöst.

Durch die Zuordnung je eines konstruktiv einfachen Schnellwechslers zu jeder der beiden Arbeitsspindeln werden die Gesamtwechselzeiten auf die letztlich allein wesentlichen Ein-und Ausbau-Vorgänge der Werkzeuge in und aus der jeweiligen Arbeitsspindel verkürzt, weil die für die Zu-und Abführung der Werkzeuge notwendigen Vorgänge mittels des universell bewegbaren Werkzeugwechslers - nicht wie bisher bei stillgesetzter Maschine -, sondern bei arbeitender Maschine durchgeführt werden können. Gemäß der Erfindung werden somit die gesamten Wechselvorgänge aufgeteilt, wobei nur die kurzfristig durchzuführenden Ein-und Ausbauvorgänge bei stillgesetzter Arbeitsspindel ablaufen, während der weitaus längere Teil der Vorgänge, wie die Entnahme der Werkzeuge aus dem Magazin, ihr Transport und ihre Ausrichtung in eine vorgegebene Übergabeposition, bei laufender Maschine erfolgen. Da die genaue Ausrichtung des jeweiligen Werkzeugs in die Spindelachse von dem stabil gelagerten Schnellwechsler vorgenommen wird, vermindern sich die technischen Anforderungen des universell bewegbaren Werkzeugwechslers bezüglich Steifigkeit und Bewegungsgenauigkeit in einem Maße, das den durch die beiden Schnellwechsler bedingten Aufwand weit übersteigt, so daß sich nicht nur die Wechselzeiten ver kürzen, sondern auch der Gesamtaufwand geringer wird.

Der in den Unteransprüchen angegebene Werkzeugwechsler bietet den Vorteil, daß das Werkzeugmagazin relativ weit zurückgesetzt am Ständer der Fräsmaschine oder auch - als gesonderte Baueinheit ausgeführt -an einem frei wählbaren Ort positioniert sein kann.

Wesentlich für den zügigen Operationsablauf der erfindungsgemäßen Vorrichtung ist es, daß die genaue Positionierung sowie auch der Ein-und Ausbau der zu wechselnden Werkzeuge mittels der konstruktiv einfachen und stabilen direkt im Spindelgehäuse gelagerten Schnellwechsler erfolgt. welche die Werkzeuge durch eine einfache und kurze Bewegung in eine gut zugängliche Übergabeposition neben dem Vertikalfräskopf bzw. neben dem Spindelstock bringen, in welcher sie dann vom Werkzeugwechsler sicher übernommen bzw. übergeben werden können.

Im folgenden wird ein Ausführungsbeispiel der erfindungsgemäßen Vorrichtung anhand der Zeichnung ausführlich beschrieben. Es zeigen:

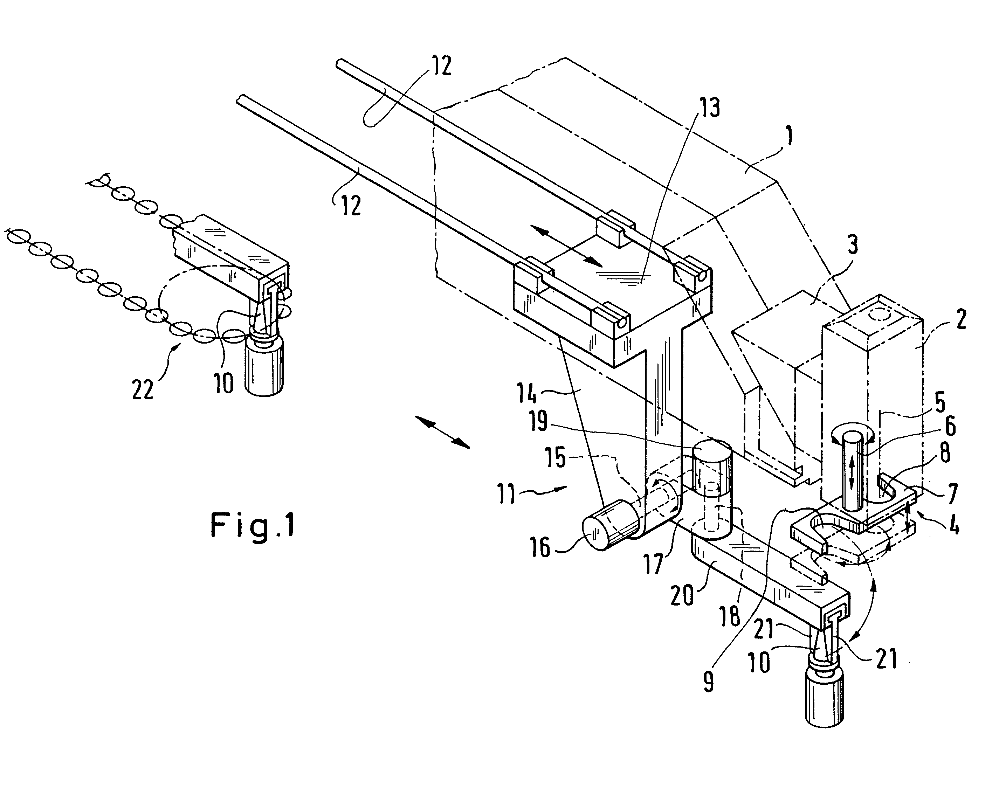

Fig. 1 die Vorrichtung beim Werkzeugwechsel einer Vertikalspindel:

Fig. 2 die Vorrichtung beim Werkzeugwechsel einer Horizontalspindel.

Die Zeichnung zeigt einen Spindelstock 1 einer Fräsmaschine, der an seiner vorderen Stirnseite einen Vertikal-Fräskopf 2 über Zwischenstücke 3 trägt. Die nicht dargestellte Arbeitsspindel ist im Vertikalfräskopf 2 gelagert und wird in herkömmlicher Weise von einem am Spindelstock 1 montierten Elektromotor über ein Brems-Schaltgetriebe, eine Klauenkupplung und mindestens ein Kegelrad-Paar angetrieben. Ferner sind in der Arbeitsspindel nicht dargestellte Spannmittel zum lösbaren Erfassen und Fixieren eines Werkzeugkegels vorgesehen.

In den Vertikalfräskopf 2 ist ein Schnellwechsler 4 integriert, der einen achsparallel zur Spindelachse 5 im Fräskopf 2 verdrehbar und axial verschiebbar gelagerten Bolzen 6 und ein an dessen unterem Ende befestigtes Tragglied in Form einer rechteckigen Platte 7 enthält. In der Platte 7 sind zwei halbrunde Ausschnitte 8, 9 gegeneinander um 180° versetzt zu beiden Seiten des Bolzens 6 vorgesehen, deren Größe und Form zur Aufnahme je eines Werkzeugkegels 10 ausgelegt ist. Ferner sind im Bereich dieser Ausschnitte 8, 9 - nicht dargestellte - Federzangen vorgesehen, die einen Werkzeugkegel erfassen und während einer Wechseloperation in der Tragplatte 7 halten. Dem Schnellwechsler 4 sind ferner ein Drehantrieb zum gesteuerten Verdrehen um 180° und ein Vorschubantrieb für die axiale Ausfahr-und Einschiebebewegung des Bolzens 6 zugeordnet, die beide in den Vertikal-Fräskopf 2 integriert sind.

Seitlich neben dem Spindelstock 1 ist ein univer seller Werkzeugwechsler 11 vorgesehen, der zum Bedienen der Horizontalspindel und der Vertikalspindel ausgelegt ist. An horizontalen Führungsschienen 12 ist ein Tragschlitten 13 in Richtung des Doppelpfeils mittels eines - nicht dargestellten - Linearantriebs. z. B. eines Spindeltriebs oder eines Druckmittelzylinders, verschiebbar geführt. Am Schlitten 13 ist ein vertikales Tragstück 14 fest montiert, in dessen unterem Endteil ein Drehzapfen 15 gelagert ist. der von einem Motor 16 verdreht wird. Auf dem freien Endabschnitt des Drehzapfens 15 ist ein Schwenkhebel 17 aufgekeilt. in dessen freiem Endteil in einer Querbohrung ein Gelenkzapfen 18 gelagert ist. Mit diesem Gelenkzapfen 18 ist einerseits ein Drehantrieb 19 und andererseits ein Schwenkarm 20 fest verbunden, der an seinem freien Ende Greifelemente 21 für die lösbare Halterung eines Werkzeugkegels 10 aufweist. Wie dargestellt, befindet sich in einer zurückgesetzten Position ein Werkzeugmagazin 22, hier ein Kettenmagazin, dessen Wechselposition - wie dargestellt - im Bewegungsbereich des Schlittens 13 bzw. des Schwenkarms 20 liegt.

Die vorstehend beschriebene Einrichtung arbeitet beim Wechsel eines Werkzeugs wie folgt:

Während einer Werkstück-Bearbeitung mit einem im Vertikal-Fräskopf 2 eingespannten Werkzeug befindet sich der Werkzeugwechsler 11 in einer zurückgezogenen Stellung, in der seine bewegbaren Teile die verschiedenen Bearbeitungsvorgänge nicht stören können. Der Schnellwechsler 4 ist ebenfalls eingezogen, so daß die Tragplatte 7 in der in Vollinien dargestellten Lage etwa an der unteren Stirnfläche des Vertikal-Fräskopfes 2 anliegt. Zum Ausbau eines Werkzeugs zusammen mit seinem Werkzeugkegel 10 wird die Arbeitsspindel durch Abbremsen stillgesetzt und anschließend in der Wechselposition genau ausgerichtet. Daraufhin wird der Linearmotor für den Schnellwechsler 4 von der Programm-Steuerung der Fräsmaschine betätigt, der den Bolzen 6 und das Tragglied 7 in die strichpunktiert dargestellte Position verfährt. Da zuvor die Spannzange in der Arbeitsspindel den Werkzeugkegel freigegeben hat, wird dieser vom Tragglied 7 und dessen Federelementen mitgenommen. Anschließend erfolgt eine Verdrehung des Schnellwechslers 4 um die Achse des Bolzens 6, so daß der im Ausschnitt 8 gehalterte Werkzeugkegel in eine Stellung seitlich neben dem Vertikal-Fräskopf 2 gelangt. Gleichzeitig kommt der den Ausschnitt 9 aufweisende Teil des Tragglieds 7 in die Achsposition der Arbeitsspindel. Ein zuvor in diesen Ausschnitt 9 eingebrachter neuer Werkzeugkegel befindet sich somit in der Spindelachse und wird durch eine vom Linearantrieb des Schnellwechslers 4 veranlaßte Einziehbewegung in die Arbeitsspindel eingeschoben und anschließend durch Betätigen ihrer Spannzange fixiert. Das im Ausschnitt 9 seitlich neben dem Vertikal-Fräskopf 2 befindliche Werkzeug wird durch eine vom Motor 18 veranlaßte Schwenkbewegung des Schwenkarms 20 von dessen - leeren - Werkzeughalter 21 erfaßt und beim Rückschwenken aus dem Ausschnitt 9 des Tragelements 7 herausgezogen. In der dargestellten Stellung des Schwenkarms 20 fährt der Schlitten 13 so weit zurück, daß das ausgebaute Werkzeug in eine vom Programm vorbestimmte Aufnahme im Kettenmagazin übergeben wird. Während des Bearbeitungsvorganges mit dem neuen Werkzeug wird dem Kettenmagazin 22 ein weiteres Werkzeug mittels des Halters 21 entnommen und in eine Bereitstellungsposition gebracht. aus der es innerhalb kürzester Zeit, z. B. noch während des Bearbeitungsvorganges oder während der Stillsetzung der Arbeitsspindel, an den - dann leeren - Ausschnitt 8 des Tragelements 7 übergeben werden kann. Damit ist ein Werkzeugwechsel abgeschlossen, der beliebig oft wiederholt wird.

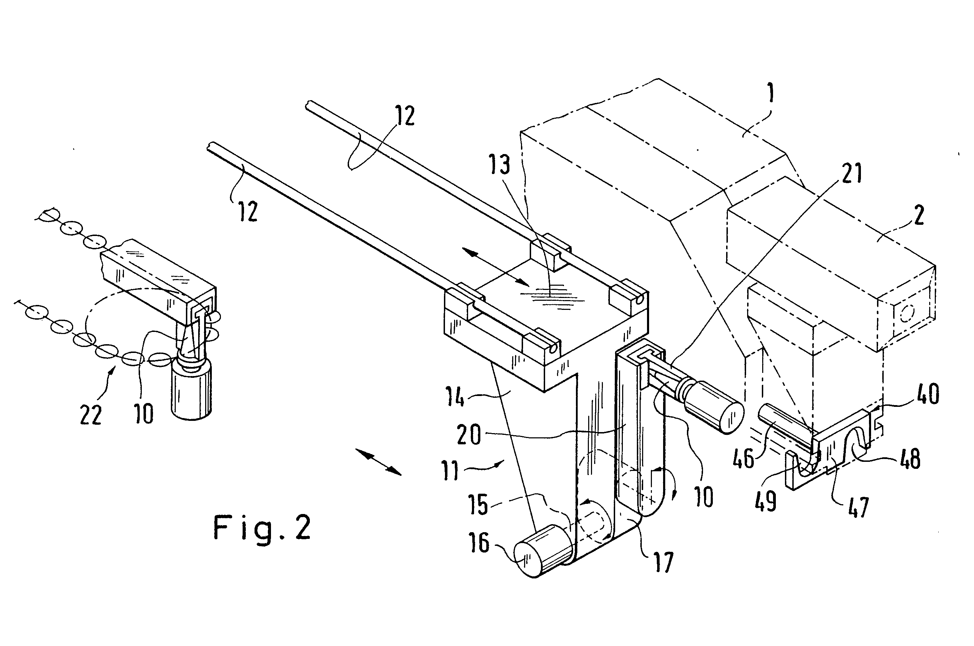

Wie aus Fig. 2 ersichtlich, vollziehen sich entsprechende. Operationen und Bewegungen beim Wechsel der Werkzeuge der Horizontalspindel, der für diesen Zweck ein direkt in den Spindelstock 1 eingebauter Schnellwechsler 40 gleicher Konstruktion zugeordnet ist. Dieser Schnellwechsler 40 enthält einen achsparallel neben der Spindelachse der Horizontalspindel im Spindelstock 1 gelagerten Drehbolzen 46, der mit Hilfe von - nicht dargestellten - Antriebsmotoren Drehbewegungen um 180° und Axialbewegungen ausführen kann. Am Ende des Drehbolzens ist ein plattenförmiges Tragelement 47 befestigt, das zwei achssymmetrisch angeordnete Werkzeugaufnahmen 48, 49 in Form von halbrunden Ausschnitten und Federelementen enthält. Zur Bedienung der seitlich vorstehenden Werkzeugaufnahme 49 ist der Schwenkhebel 17 in die in Fig. 2 dargestellte Position durch den Motor 16 geschwenkt, so daß der Schwenkarm 20 durch eine Bewegung um die Achse des Bolzens 19 das Werkzeug 10 in die Aufnahme 49 einlegen bzw. aus ihr herausnehmen kann.

## Ansprüche

1. Vorrichtung für den Werkzeugwechsel der Horizontal-und Vertikalspindel einer Universal-Fräsmaschine, bestehend aus einem Werkzeugmagazin und aus einem Werkzeugwechsler, der die Werkzeuge vom Magazin übernimmt und sie wahlweise zur Vertikal-oder Horizontalspindel transportiert,

**dadurch gekennzeichnet,**

daß der Vertikalspindel und der Horizontalspindel je ein Schnellwechsler (4, 40) zugeordnet ist, der einen motorisch verdrehbar und axial verschiebbar parallel zur jeweiligen Spindelachse im Vertikal-Fräskopf (2) und im Spindelstock (1) angeordneten Drehbolzen (6, 46) und ein vor der jeweiligen Spindel angeordnetes Tragelement (7, 47) mit zwei Werkzeugaufnahmen in Form von Ausschnitten (8, 9; 48, 49) mit Federzangen enthält, von denen in jeder Endlage ein Ausschnitt (8; 48) koaxial zur jeweiligen Spindelachse (5) ausgerichtet und der andere diametral gegenüberliegende Ausschnitt (9; 49) neben dem Vertikal-Fräskopf (2) bzw. dem Spindelstock im Zugriffsbereich des Werkzeugwechslers (11) angeordnet ist.

2. Vorrichtung nach Anspruch 1, dadurch gekennzeichnet, daß das Tragelement (7) eine Platte ist, in der die beiden Ausschnitte (8, 9) symmetrisch zur Achse des Drehbolzens (6) angeordnet sind.

3. Vorrichtung nach Anspruch 1, dadurch gekennzeichnet, daß der Werkzeugwechsler (11) einen in ortsfesten Führungsschienen (12) motorisch verfahrbaren Schlitten (13) enthält, an dem ein motorisch bewegbares Gelenkhebelsystem (14 bis 20) mit einem Schwenkarm (20) angeordnet ist, welcher an seinem freien Ende eine Werkzeugaufnahme (21) aufweist.

Fig.1

0 243 711

Fig. 2